# EUROPÄISCHE PATENTSCHRIFT

(11) **EP 2 852 048 B1**
(45) Veröffentlichungstag und Bekanntmachung des Hinweises auf die Patenterteilung: **02.08.2017**
(21) Anmeldenummer: 13185124.8
(22) Anmeldetag: 19.09.2013
(51) Int. Cl.: H02P 23/14, H02P 21/14

(54) **Elektrische Maschine mit adaptivem Regler**
Electric machine with adaptive controller
Machine électrique avec régulateur adaptatif

(43) Veröffentlichungstag der Anmeldung: 25.03.2015
(73) Patentinhaber: Siemens Aktiengesellschaft, 80333 München (DE)
(72) Erfinder: Kaiser, Matthias, 91301 Forchheim (DE); Kubik, Alexander, 91058 Erlangen (DE); Künzel, Stefan, 91056 Erlangen (DE); Schäfers, Elmar, Dr., 90763 Fürth (DE); Wedel, Bernd, 91096 Möhrendorf (DE)

(56) Entgegenhaltungen:
- EP-A1- 0 476 588
- WO-A2-2007/136828
- DE-A1-102007 028 914
- DE-A1-102011 085 551
- US-A1- 2004 085 035

## Beschreibung

Die Erfindung betrifft eine Reglervorrichtung für eine elektrische Maschine. Die Reglervorrichtung erzeugt mittels zumindest einen Reglermoduls zumindest einen Stellwert für einen Wechselrichter der elektrischen Maschine. Die Reglervorrichtung weist auch eine Schätzeinrichtung zum Schätzen eines Trägheitsmoments auf.

Eine solche Schätzeinrichtung ist beispielsweise aus der EP 2 537 789 A2 bekannt. Diese aus dem Stand der Technik bekannte Schätzeinrichtung ermittelt einen Trägheitsmoment-Faktor einer Motoranordnung einer Aufzugsanlage. Zum Schätzen des Trägheitsmoment-Faktors wird bei der Inbetriebnahme des Aufzugs ein spezielles Anregungssignal mit einer niedrigen Frequenz erzeugt, so dass sich ein Verhalten der elektrischen Maschine ergibt, als wäre die Motoranordnung von dem mechanischen System der Aufzugsanlage abgekoppelt. Insbesondere wirkt auf das Motormoment in diesem Fall kein Lastmoment.

Weitere Schätzeinrichtungen für ein Trägheitsmoment sind aus der DE 10 2011 085 551 A1 und der US 2012-0217917 A1 und aus dem Journal Technik (Journal Technik Up2date 2012 #01 - Pages: 26-28 - ISBN: 978-3-942905-27-5) bekannt.

Um Leistungsreserven gering halten zu können, benötigt eine elektrische Antriebsanordnung eine Anpassung an den mechanischen Antriebsstrang. Andernfalls ist ein stabiler Betrieb für alle Lastfälle nicht möglich und die gewünschte Dynamik wird nicht erreicht. Der mechanische Anbau, beispielsweise eine Kupplung, Riemenscheiben und insbesondere die Nutzlast, werden aber vom Benutzer des Antriebsstrangs nach der Installation der elektrischen Maschine angebaut und sind somit bei der Herstellung der Antriebsanordnung dem Hersteller unbekannt. Daher ist nach Installation einer Antriebsanordnung in der Regel eine Inbetriebnahmephase nötig. Die Streckenparameter der Regelstrecke werden hierbei manuell in einem Inbetriebnahmemodus, also unmittelbar nach der Installation, vom Benutzer ermittelt. Dies geschieht zum Beispiel über Sprungantworten, eine Rauschanregung oder Beschleunigungsvorgängen. Dieser Vorgang muss vor der ersten Inbetriebnahme erfolgen und bei Umbau des Antriebsstrangs wiederholt werden. Aus den Streckenparametern und den zugehörigen Messungen lassen sich Reglerdaten als Parameterwerte ermitteln und dann entsprechend bei der Reglervorrichtung einstellen. Dies geschieht in der Regel ebenfalls von Hand mittels des Konfigurationsrechners, der an die Reglervorrichtung angeschlossen wird. Das erfordert einen geschulten Inbetriebnehmer. Möchte man die Parameter automatisiert einstellen, so geht auch dies nicht während des Betriebs, sondern es muss mit Anregungsfunktionen vermessen werden, die ohne das Lastmoment der Nutzlast aus dem Produktionsprozess angewendet werden.

In dem Dokument DE 10 2007 028 914 A1 ist für einen elektrischen Motor ein Regler beschrieben, der ein Trägheitsmoment des Motors immer dann schätzt, wenn das Beschleunigungsmoment von dem elektrischen Motor ausreichend größer als ein Lastmoment ist. Auf Grundlage eines eingestellten Trägheitsmomentswerts wird eine proportionale Verstärkung eingestellt.

In dem Dokument EP 0 476 588 A1 ist ein Verfahren zum Schätzen eines Trägheitsmoments einer elektrischen Maschine beschrieben. Während einer Beschleunigungsphase wird die Zeitdauer der Beschleunigung sowie die Drehzahländerung erfasst und auf Grundlage dieser Werte das Trägheitsmoment ermittelt.

In dem Dokument DE 10 20011 085 551 A1 ist ein Verfahren zum Ansteuern eines Elektromotors beschrieben, wobei ein Trägheitsmoment des Elektromotors berechnet wird und mittels des berechneten Trägheitsmoments eine Vorsteuereinrichtung zum Einstellen eines Vorsteuerdrehmoments, das auf der Grundlage des Trägheitsmoments berechnet wird. Eine maximale Drehzahländerung beim Beschleunigen oder Abbremsen des Elektromotors ist abhängig von dem Trägheitsmoment des Elektromotors ausgewählt.

In dem Dokument WO 2007/136828 A2 ist ein Verfahren zum Regeln einer elektrischen Maschine beschrieben, wobei Resonanzfrequenzen bei der Regelung gedämpft werden. Zum Ermitteln der Resonanzfrequenzen ist eine Schätzmethode vorgesehen, die darauf beruht, eine Resonanzfrequenz und eine Breite einer Bandsperre in Abhängigkeit von gemessenen Frequenzbereichen, in welchen es zur Resonanz kommt, einzustellen.

In dem Dokument US 2004/0085035 A1 ist für eine elektrische Maschine eine Regeleinrichtung beschrieben, die eine Bandsperre zum Unterdrücken von Vibrationen verwendet. Die Parameter der Bandsperre werden auf der Grundlage einer Gradientenabstiegsmethode ermittelt, die eine Vibrationskomponente in einer Drehzahl der elektrischen Maschine zu Null regelt. Die Vibrationskomponente wird mittels eines Hochpassfilters aus der gemessenen Drehzahl ermittelt.

Der Erfindung liegt die Aufgabe zugrunde, bei einer Reglervorrichtung für eine Antriebsanordnung mit elektrischer Maschine und daran angekoppelter Nutzlast das dynamische Verhalten der Antriebsanordnung zu verbessern.

Die Aufgabe wird durch die Gegenstände der unabhängigen Patentansprüche gelöst. Vorteilhafte Weiterbildungen ergeben sich durch die Merkmale der abhängigen Patentansprüche.

Durch die Erfindung ist eine Reglervorrichtung für eine elektrische Maschine bereitgestellt. Eine solche Reglereinrichtung kann beispielsweise einen Microcontroller, einen digitalen Signalprozessor oder eine andere Prozessoreinrichtung umfassen, durch welche ein Regelprogramm für die elektrische Maschine ausgeführt wird. Die Reglervorrichtung ist dazu ausgelegt, mittels zumindest eines Reglermoduls, also beispielsweise eines Lagereglers oder Drehzahlreglers, zumindest einen Stellwert für einen Wechselrichter der elektrischen Maschine zu erzeugen. Zusätzlich weist die Reglervorrichtung eine Schätzeinrichtung auf, die zum Schätzen eines Trägheitsmoments ausgelegt ist. Diese Schätzeinrichtung ist hier auch als Trägheitsschätzer bezeichnet.

Erfindungsgemäß ist zusätzlich eine Konfigurationseinrichtung bereitgestellt, welche dazu ausgelegt ist, während eines Betriebs der elektrischen Maschine, während also der vollständige Antriebsstrang umfassend die elektrische Maschine und den mechanischen Anbau mit der Nutzlast betrieben wird, die Schätzeinrichtung zu betreiben und hierdurch mittels der Schätzeinrichtung das Trägheitsmoment des gesamten Antriebsstrangs zu schätzen. In Abhängigkeit von dem geschätzten Trägheitsmoment wird dann durch die Konfigurationseinrichtung ohne ein Zutun des Benutzers bei dem zumindest einen Reglermodul, also z.B. dem Drehzahlregler, zumindest ein Konfigurationsparameter eingestellt, durch welchen ein Stellverhalten des jeweiligen Reglermoduls bestimmt ist.

Hierdurch ergibt sich insgesamt in vorteilhafter Weise eine Parametrierung der Reglervorrichtung im Betrieb des Antriebsstranges. Die Konfigurationseinrichtung wird dabei ohne Benutzerbefehl aktiviert, das heißt der Benutzer kann den Antriebsstrang aufbauen, indem er an die Antriebsanordnung (Reglervorrichtung, Wechselrichter und elektrische Maschine) den mechanischen Anbau mitsamt der Nutzlast befestigt, und den vollständigen Antriebsstrang einfach in Betrieb nehmen. Die Reglervorrichtung passt dann ihr Regelverhalten selbstständig an den aufgebauten Antriebsstrang an. Es ist kein Inbetriebnahmeschritt vor dem eigentlichen Betrieb des Antriebsstrangs nötig. Die Konfigurationseinrichtung kann auch jederzeit wieder aktiviert werden, so dass auch Veränderungen des Trägheitsmoments erkannt und das zumindest eine Reglermodul adaptiert wird. Es ist also nicht nötig, eine Robustheitsreserve, z.B. eine Dynamikreserve, für unvorhergesehene Lastfälle bereit zu halten.

Gemäß der Erfindung ist als ein Reglermodul ein einem Regler vorgelagertes oder nachgelagertes Resonanzfilter mit einer Bandsperre bereitgestellt. Die Konfigurationseinrichtung ist hierbei dazu ausgelegt, eine Eigenfrequenz des Antriebsstrangs zu ermitteln und die Bandsperre auf die Eigenfrequenz zu verschieben. Die Eigenfrequenz kann auf der Grundlage des geschätzten Trägheitsmoments und insbesondere auf der Grundlage eines Masse-Feder-Modells ermittelt werden. Ein vorgelagertes Resonanzfilter dämpft ein Resonanz-Istwert-Signal oder Eingangssignal des Reglers im Bereich der Eigenschwingfrequenz des Antriebsstrangs. Entsprechend wird bei einem nachgeordneten oder nachgelagerten Resonanzfilter das Stellsignal des Reglers im Bereich der Eigenschwingfrequenz gedämpft. Die Bandbreite der Bandsperre beträgt insbesondere weniger als 1000 Hz oder weniger als 100 Hz oder weniger als 50 Hz. Durch Anpassen des Resonanzfilters mittels des momentanen Trägheitsmoments werden Resonanzen bei der Regelung, also ein Aufschwingen des Regelsystems, verhindert.

Eine Möglichkeit der beschriebenen Schätzung des Trägheitsmoments besteht beispielsweise darin, während des Beschleunigens des Antriebsstranges eines Veränderung der Bewegungsgeschwindigkeit oder Drehzahl der elektrischen Maschine zu erfassen und hierbei die von der elektrischen Maschine aufgenommene elektrische Leistung zu messen, also z.B. die verwendete Versorgungsspannung und den Versorgungsstrom zu messen. Hieraus kann dann in bekannter Weise auf das Trägheitsmoment des Antriebsstrangs rückgeschlossen werden. Mit Beschleunigung ist hierbei auch ein Abbremsen mittels der elektrischen Maschine gemeint.

Gemäß einer Ausführungsform der Erfindung ist die Konfigurationseinrichtung dazu ausgelegt, den Trägheitsschätzer nur zu betreiben, falls eine Beschleunigung des Antriebsstrangs größer als eine vorbestimmte Mindestbeschleunigung ist. Hierdurch ergibt sich der Vorteil, dass der geschätzte Wert für die Trägheit besonders zuverlässig geschätzt werden kann, da der Einfluss von drehzahlunabhängigen Größen, wie beispielsweise einer Reibung, durch entsprechende Wahl des Wertes für die Mindestbeschleunigung in vorhersehbarer Weise reduziert werden kann. Die Beschleunigung des Antriebsstrangs kann zum Beispiel bei einem rotatorischen Antrieb eine Drehzahländerung oder bei einem Linearantrieb eine Beschleunigung einer translatorischen Bewegung darstellen. Die Mindestbeschleunigung kann beispielsweise 100 U/min pro Sekunde oder 500 U/min pro Sekunde oder 1000 U/min pro Sekunde oder in einem Intervall von 100 U/min pro Sekunde bis 1000 U/min pro Sekunde liegen.

Eine weitere Ausführungsform der Erfindung sieht vor, dass die Konfigurationseinrichtung dazu ausgelegt ist, eine von der Nutzlast auf die elektrische Maschine wirkende Lastkraft zu ermitteln. Hierunter ist das auf die elektrische Maschine wirkende Lastmoment und/oder eine Reibung in dem mechanischen Anbau zu verstehen, also ein Reibmoment. Bei dieser Ausführungsform der Erfindung wird die Lastkraft insbesondere gemessen, während eine Geschwindigkeitsänderung der elektrischen Maschine kleiner als ein vorbestimmter Mindestwert ist, insbesondere bei gleichbleibender Geschwindigkeit. Mit Geschwindigkeit ist hier zum einen eine Drehzahl (rotatorischer Antrieb) und zum anderen die Geschwindigkeit einer translatorischen Bewegung (Linearantrieb) gemeint. Die Lastkraft kann sich als Lastmoment oder als linear wirkende Kraft auswirken. Durch die Schätzung der Lastkraft ergibt sich der Vorteil, dass beim Einstellen der Konfigurationsparameter die Parameterwerte genauer berechnet werden können, da zwischen dem Trägheitsmoment und dem Lastmoment unterschieden werden kann.

Weitere Ausführungsformen der Erfindung ergeben sich in Abhängigkeit davon, welche Reglermodule in der Reglervorrichtung vorgesehen sind.

Gemäß einer Ausführungsform ist als Reglermodul eine Lageregelung und/oder Geschwindigkeitsregelung bereitgestellt. Im Falle eines rotatorischen Antriebs stellt die Geschwindigkeitsregelung eine Drehzahlregelung dar. Die Konfigurationseinrichtung ist hierbei bevorzugt dazu ausgelegt, als den zumindest einen Konfigurationsparameter dieses Reglermoduls eine Regel- oder Reglerverstärkung und/oder Filtereinstellungen des Reglermoduls, das heißt ein Frequenzverhalten und/oder Übertragungsverhalten der Regelung, und/oder ein Referenzmodell einzustellen. Referenzmodelle sind an sich aus dem Stand der Technik bekannt, beispielsweise in Zusammenhang mit Kalman-Filtern und anderen statistischen Beobachtern. Es ergibt sich der Vorteil, dass das Reglermodul mit seinem Regelverhalten an das momentan im Antriebsstrang wirkende Trägheitsmoment angepasst ist und die Reglerdynamik ohne Notwendigkeit einer Dynamikreserve maximiert werden kann.

Gemäß einer anderen vorteilhaften Weiterbildung ist bei der Reglervorrichtung als ein Reglermodul eine Vorsteuerung bereitgestellt. Die Konfigurationseinrichtung kann hierbei dazu ausgelegt sein, als den zumindest einen Konfigurationsparameter dieses Reglermoduls einen Soll-Stellwert einzustellen. Zusätzlich oder alternativ dazu kann vorgesehen sein, dass bei einer von der Vorsteuerung abhängigen Symmetrierung des der Symmetrierung unterlagerten Reglers, beispielsweise also eines Drehzahlreglers, eine Zeitkonstante eingestellt wird. Durch Einstellen der Vorsteuerung und/oder der Symmetrierung auf der Grundlage des aktuell geschätzten Trägheitsmoments wird ein Überschwingen bei sprunghaften Änderungen des Sollwerts der Regelung verhindert.

Als ein weiteres Reglermodul ist gemäß einer Ausführungsform der Erfindung eine Beschleunigungsbegrenzung der elektrischen Maschine bereitgestellt. In diesem Zusammenhang ist die Konfigurationseinrichtung bevorzugt dazu ausgelegt, als den zumindest einen Konfigurationsparameter dieses Reglermoduls einen Wert für eine Maximalbeschleunigung und/oder einen Wert für eine maximale Verzögerung (Abbremsen) bereitzustellen. Hierdurch werden in vorteilhafter Weise mechanische Überlastungen der elektrischen Maschine und des daran gekoppelten mechanischen Anbaus verhindert.

Eine weitere Ausführungsform der Erfindung sieht vor, dass mehrere Reglermodule, insbesondere eine Kombination aus den beschriebenen Reglermodulen, insbesondere alle der beschriebenen Reglermodule, bereitgestellt sind. Hierbei ist die Konfigurationseinrichtung dann bevorzugt dazu ausgelegt, jedes Reglermodul unabhängig von jedem anderen Reglermodul zu konfigurieren. Durch diese klare Trennung ergibt sich der Vorteil, dass keine Abhängigkeiten zwischen den Konfigurationsparametern der einzelnen Reglermodule bestehen. Dennoch wird durch Zugrundelegen eines einzigen Schätzwerts für das Trägheitsmoment sichergestellt, dass die Reglermodule stimmig zusammenwirken. Durch die unabhängige Konfiguration ergibt sich als weiterer Vorteil, dass die einzelnen Reglermodule zu unterschiedlichen Zeitpunkten konfiguriert werden können.

Wie bereits ausgeführt, wird durch die Konfigurationseinrichtung in vorteilhafter Weise ein Anpassen der Antriebsanordnung an den mechanischen Anbau während des Betriebs des Antriebsstrangs durchgeführt. Eine Ausführungsform der Erfindung sieht hierbei vor, dass das Einstellen der Konfigurationsparameter dauerhaft durch wiederholtes oder iteratives Adaptieren erfolgt. Hierdurch ergibt sich der Vorteil, dass die Reglervorrichtung jederzeit an das aktuell wirkende Trägheitsmoment derart angepasst ist, dass das dynamische Betriebsverhalten des Antriebsstrangs maximiert oder in anderer Weise optimiert sein kann.

Eine andere Ausführungsform sieht vor, das Einstellen der Konfigurationsparameter mehrmals, aber nur zu vorbestimmten Zeitpunkten und/oder zeitlich begrenzt durchzuführen. Hierbei wird dann die Trägheitsschätzung und die Einstellung der Konfigurationsparameter jeweils für eine vorbestimmte Zeitdauer oder bis zur Erfüllung eines vorbestimmten Konvergenzkriteriums, das insbesondere die Schätzung, bevorzugt eine iterative Schätzung, des Trägheitsmoments umfasst, durchgeführt. Diese Ausführungsform weist den Vorteil auf, dass bei veränderlichem Lastmoment, insbesondere periodisch veränderlichem Lastmoment, keine Wechselwirkung mit der Schätzung des Trägheitsmoments und der daraufhin vorgenommenen Einstellung der Konfigurationsparameter verursacht wird, was zu einer unerwünschten Resonanz im Adaptionsverhalten führen kann.

Durch die Erfindung wird auch eine Antriebsanordnung bereitgestellt, welche zumindest eine elektrische Maschine und mit einem Wechselrichter der elektrischen Maschine gekoppelten Reglervorrichtung aufweist. Die Reglervorrichtung ist eine Ausführungsform der erfindungsgemäßen Reglervorrichtung. Diese Antriebsanordnung kann in vorteilhafter Weise mit einem mechanischen Anbau gekoppelt werden, so dass sich aus der elektrischen Maschine und dem mechanischen Anbau insgesamt ein Antriebsstrang ergibt, der durch die Reglervorrichtung mit verhältnismäßig ohne Robustheitsreserve und mit für das bei aktuelle Trägheitsmoment maximierter Dynamik sicher betrieben werden kann.

Schließlich ist durch die Erfindung noch ein Verfahren zum Konfigurieren einer Reglervorrichtung während eines Betriebes eines von der Reglervorrichtung gesteuerten Antriebsstrangs bereitgestellt. Hierbei wird in der beschriebenen Weise während eines Betriebs des Antriebsstrangs ohne ein Zutun eines Benutzers ein Trägheitsschätzer der Reglervorrichtung betrieben und in Abhängigkeit von dem geschätzten Trägheitsmoment bei zumindest einem Reglermodul der Reglervorrichtung jeweils ein Parameterwert zumindest eines Konfigurationsparameters eingestellt, der ein Stellverhalten des jeweiligen Reglermoduls bestimmt. Als ein Reglermodul ist ein einem Regler vorgelagertes oder nachgeordnetes Resonanzfilter 38 mit einer Bandsperre 40 bereitgestellt, wobei eine Konfigurationseinrichtung 48 eine Eigenschwingfrequenz F0 des Antriebstranges A ermittelt und die Bandsperre 40 auf die Eigenschwingfrequenz F0 verschiebt, wobei die Eigenfrequenz auf der Grundlage des geschätzten Trägheitsmoments und auf der Grundlage eines Masse-Feder-Modells ermittelt wird.

Zu der Erfindung gehören auch Weiterbildungen des erfindungsgemäßen Verfahrens, welche Merkmale aufweisen, die bereits im Zusammenhang mit den Weiterbildungen der erfindungsgemäßen Reglervorrichtung beschrieben worden sind. Aus diesem Grund werden die entsprechenden Weiterbildungen des erfindungsgemäßen Verfahrens hier nicht noch einmal erläutert.

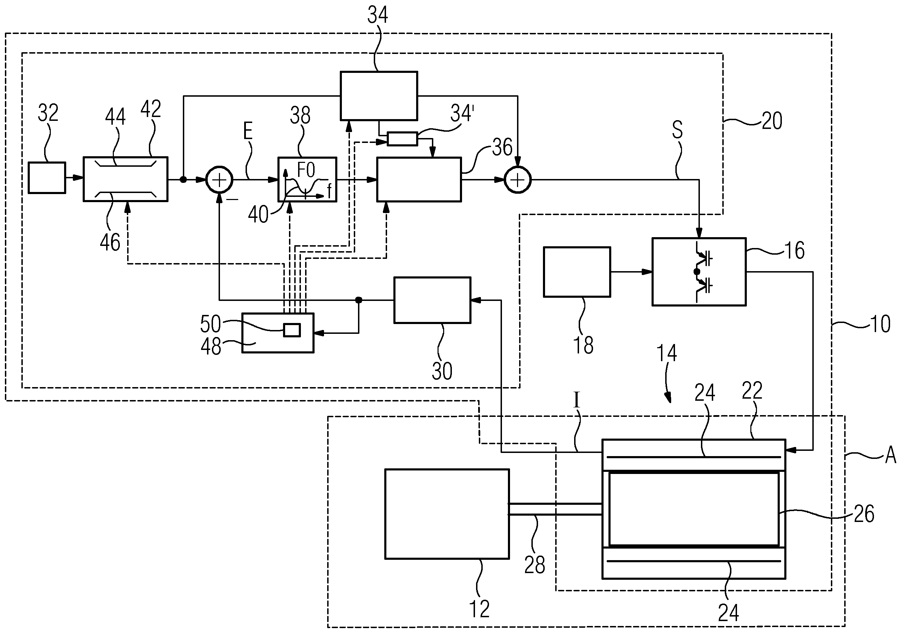

Im Folgenden ist ein Ausführungsbeispiel der Erfindung beschrieben. Hierzu zeigt die einzige Figur FIG eine Ausführungsform der erfindungsgemäßen Antriebsanordnung.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt eine Antriebsanordnung 10 an die ein mechanischer Anbau 12 gekoppelt ist. Der mechanische Anbau 12 stellt eine Nutzlast dar. Die Antriebsanordnung 10 kann eine elektrische Maschine 14 mit zugehörigem Wechselrichter 16 und elektrischer Leistungsversorgung 18 sowie eine Reglervorrichtung 20 zum Stellen des Wechselrichters 16 aufweisen. Die elektrische Maschine 14 kann ein Linearantrieb oder, wie dargestellt, ein rotatorischer Antrieb sein. In dem Beispiel weist die elektrische Maschine 14 einen Stator 22 mit elektrischen Windungen 24 zum Erzeugen eines magnetischen Drehfelds auf. In dem Stator 22 kann ein Rotor 26 drehbar gelagert sein. Eine Welle 28 des Rotors 26 kann mit dem mechanischen Anbau 12 gekoppelt sein. Der mechanische Anbau 12 kann beispielsweise ein Förderband in einer Fertigungsanlage, ein Bohrer in einer Werkbank, ein stellbares Ventil beispielsweise in einem Kraftwerk oder eine Antriebsachse in einem Kraftfahrzeug sein.

Die Reglervorrichtung 20 steuert oder stellt den Wechselrichter derart, dass dieser die elektrischen Wicklungen 24 des Stators 22 abwechselnd mit einem elektrischen Strom aus der Leistungsversorgung 18 beaufschlagt und hierdurch das magnetische Drehfeld im Stator 22 erzeugt wird, welches mit dem Rotor 26 wechselwirkt und diesen mit einem Drehmoment beaufschlagt, das von der Welle 28 auf den mechanischen Anbau 12 übertragen wird. Die Leistungsversorgung 18 kann hierzu beispielsweise einen Gleichspannungs-Zwischenkreis umfassen, der von einem Gleichrichter aus beispielsweise einem elektrischen Versorgungsnetz (zum Beispiel 230 V, 50 Hz) versorgt wird.

Die Reglervorrichtung 20 erzeugt in bekannter Weise zum Stellen des Wechselrichters 16 Stellsignale S, durch welche beispielsweise der Strom durch die Wicklungen 24 eingestellt wird. Um hierbei eine Regelung zu realisieren, können Istwerte I zu mechanischen oder elektrischen Größen der elektrischen Maschine 22 von einer Messeinrichtung 30 der Reglervorrichtung 20 in bekannter Weise erfasst werden. Beispielsweise können verkettete Wechselspannungen und/oder eine Drehlage des Rotors 26 gemessen werden. In dem gezeigten Beispiel ist von der Reglervorrichtung nur eine einzelne Regelschleife beispielsweise zum Regeln des Drehmoments an der Welle 28 oder der Drehzahl des Rotors oder des Stromes durch die Wicklungen 24 dargestellt. Die Reglervorrichtung 20 kann auch eine kaskadierte Regelung z.B. mit überlagertem Drehzahlregler und/oder Momentenregler umfassen.

Die Reglervorrichtung 20 empfängt einen Sollwert 32 und vergleicht den Sollwert 32 mit dem von der Messeinrichtung 30 bereitgestellten Istwert, um eine Reglerabweichung E zu ermitteln. Umrechnungen der Messgrößen sind hier nicht dargestellt. In an sich bekannter Weise kann die Reglervorrichtung eine Vorsteuerung 34 und den eigentlichen Regler 36 aufweisen. Die Vorsteuerung 34 kann über eine Symmetrierung 34' in an sich bekannter Weise einen Regelparameter des Reglers 16, beispielsweise dessen Zeitkonstante, nach einem Vorsteuereingriff anpassen, um ein Überschwingen durch einen der Vorsteuerung folgenden Reglereingriff zu verringern.

Der Regler 36 kann z.B. ein Stromregler, ein Drehzahlregler, ein Geschwindigkeitsregler, ein Momentenregler oder ein Lageregler sein. Das von dem Regler 36 und der Vorsteuerung 34 jeweils erzeugte Stellsignal kann additiv überlagert werden. Hierbei sind Anpassungen des entstehenden Stellsignals S an den Wechselrichter 16 möglich, z.B. eine Pulsweitenmodulation.

Dem Regler 36 kann ein Resonanzfilter 38 (wie hier dargestellt) vorgelagert oder auch nachgelagert sein. Das Resonanzfilter kann eine Bandsperre 40 mit einer Sperrfrequenz F0 aufweisen.

Durch eine Begrenzungsvorrichtung 42 kann eine maximale Beschleunigung 44 und eine maximalen Verzögerung 46 begrenzt werden. Die Begrenzungsvorrichtung 42 kann z.B. den Sollwert 32 begrenzen. Das Ausgangssignal der Begrenzungsvorrichtung 42 kann dabei dem Regler 36 und der Vorsteuerung 34 als Eingangssignal dienen.

Die elektrische Maschine 22, die Welle 28 und der mechanische Anbau 12 bilden zusammen einen Antriebsstrang A, der ein bestimmtes Trägheitsmoment aufweist, das mechanisch auf den Rotor 26 wirkt, wenn dieser mittels des magnetischen Drehfelds gemäß der Sollwertvorgabe des Sollwerts 32 gesteuert werden soll.

Für eine dynamische Lage- oder Drehzahlregelung des Antriebsstrangs A muss die Reglervorrichtung 20 an den Antriebsstrang A angepasst werden. Andernfalls ist ein stabiler Betrieb nicht möglich oder die gewünschte Dynamik wird nicht erreicht. Der mechanische Anbau 12, also beispielsweise die Kupplung, Riemenscheiben und die Last selbst, sind nachträglich an die Welle 28 angebaut worden und somit beim Herstellen der Reglervorrichtung 20 und der elektrischen Maschine 22 unbekannt gewesen. Dennoch musste nicht bei einer Inbetriebnahme der Antriebsvorrichtung 10 nach dem Ankoppeln des mechanischen Anbaus 12 aufwendig durch einen Servicemechaniker des Herstellers der Antriebsanordnung 10 die Regelstrecke durch Parameter des Reglers 36, der Vorsteuerung 34, des Resonanzfilters 38 und der Beschleunigungsbegrenzung 42 eingestellt werden.

Bei der Antriebsanordnung 10 ist es möglich, dass die Antriebsanordnung aus ihren Messgrößen I, insbesondere der Drehzahl oder Geschwindigkeit eines Lagegebers und/oder einem Stromistwert, diese Einstellungen während des Betriebs des Antriebsstranges A selbst vornimmt und somit einen stabilen und dynamischen Betrieb ermöglicht, ohne dass hierzu gezielt Handlungen durch eine Bedienperson angestoßen werden müssen oder die Bedienperson sogar manuell Einstellungen vornehmen muss. Außerdem kann die Antriebsanordnung 10 auch Veränderungen des Antriebsstranges A ohne Benutzereingriff und ohne Wechsel in einen Inbetriebnahme- oder Konfigurationsmodus, reagieren. Es müssen insbesondere nach der Inbetriebnahme also keine Sprungantworten, Rauschanregungen oder Beschleunigungsvorgänge ohne angekoppelten mechanischen Anbau 12 durchgeführt werden, wie dies in einem Inbetriebnahmemodus typisch ist.

Die Reglervorrichtung 20 weist hierzu eine Konfigurationseinrichtung 48 mit einem Trägheitsschätzer 50 auf. Der Trägheitsschätzer 50 ist dazu ausgelegt, aus den Istwerten I das vorhandene Trägheitsmoment des Antriebsstrangs A zu ermitteln. Die Konfigurationseinrichtung 48 kann auf der Grundlage des geschätzten Trägheitsmoments die Reglerkomponenten 34, 34', 36, 38, 42 der Reglervorrichtung 20 konfigurieren, das heißt jeweils zumindest einen Konfigurationsparameter in Abhängigkeit von dem geschätzten Trägheitsmoment einstellen.

Der Trägheitsschätzer 50 ermittelt hierzu insbesondere während einer ausreichend großen Beschleunigung des Antriebsstrangs A, das heißt insbesondere bei einer ausreichenden Drehzahländerung des Rotors 26, das Trägheitsmoment oder die beschleunigte Masse. Das Trägheitsmoment ist einer der wichtigsten Regelstreckenparameter, der während des Betriebs nun ständig neu ermittelt werden kann. Des Weiteren kann vorgesehen sein, dass während die Drehzahl oder Geschwindigkeit nicht verstellt wird, der Drehzahlschätzer 50 zusätzlich das Lastmoment oder die Lastkraft ermittelt. Aus dem Trägheitsmoment oder der beschleunigten Masse werden dann die Einstelldaten für den Regler 36 die Vorsteuerung 34 inklusive Symmetrierung 34' und/oder die Beschleunigungsgrenzen 44, 46 der Begrenzungseinrichtung 42 berechnet. Falls der Regelkreis aufgrund einer Resonanz instabil wird, wird die Konfigurationseinrichtung 48 auf die Bandsperre 40 auf die Schwingfrequenz eingestellt werden, das heißt die Sperrfrequenz F0 wird gleich der Eigenfrequenz gesetzt oder zumindest wird die Sperrfrequenz F0 derart eingestellt, dass sich die Eigenfrequenz im Sperrebereich 40 befindet. Durch Anpassen des Resonanzfilters 38 wird die Bandbreite und die zentrale Frequenz F0 des Kerbfilters eingestellt. Hierdurch wird für den Reglerausgang 36, insbesondere wenn dieser ein Drehzahlregler ist, die Eigenschwingfrequenz des Antriebsstrangs A entfernt, was den Regler 36 stabilisiert. Die Sperrfrequenz F0 und gegebenenfalls die Bandbreite der Bandsperre 40 können in Abhängigkeit des geschätzten Trägheitsmoments ermittelt werden, beispielsweise auf Grundlage eines Masse-Feder-Modells.

Durch das Reglertuning wird die Reglerverstärkung und/oder Filtereinstellungen des Lage- und Drehzahlreglers angepasst. Durch die Begrenzungseinrichtung 42 wird die Beschleunigung der Verfahrkurve an die maximal mögliche Beschleunigung und Verzögerung angepasst.

Bei der Vorsteuerung kann der Vorsteuerwert aus dem Sollwert 32 durch einen Proportionalitätsfaktor berechnet werden, der in der Regel eine Funktion des Trägheitsmoments ist. Daher kann auch das geschätzte Trägheitsmoment hier durch die Konfigurationseinrichtung 48 dazu genutzt werden, den Vorsteuerwert direkt zu berechnen. Die Symmetriereinrichtung 34' kann beispielsweise eine Symmetrier-Zeitkonstante T berechnen, die sich als T = J/K berechnen kann, wobei J hierbei das geschätzte Trägheitsmoment und K eine Proportional-Verstärkung des Reglers 36 sein kann.

Die obere Beschleunigungsgrenze 44 kann sich beispielsweise berechnen aus ACC = (Mmax - Mfric)/J, wobei ACC der Wert für die maximale Beschleunigung 44 ist und Mmax das maximale Antriebsmoment der elektrischen Maschine 22 und Mfric das Reibmoment darstellt. Die maximale Verzögerung 46 kann berechnet werden aus DEC = (Mmax + Mfric)/J, wobei DEC der Wert für maximale Verzögerung 46 ist.

Bei dem Regler können ein oder mehrere Konfigurationsparameter ebenfalls in Abhängigkeit des geschätzten Trägheitsmoments J berechnet werden. Hierzu kann durch die Konfigurationseinrichtung 48 auf die aus dem Stand der Technik bekannten Berechnungsformeln für Reglerparameter zurückgegriffen werden, die eben in der Regel von dem Trägheitsmoment J abhängig sind.

Wird bei der Reglervorrichtung 20 hierdurch eine klare Trennung der verschiedenen Konfigurationsschritte erreicht, indem die Reglermodule 34, 34', 36, 38, 42 unabhängig voneinander konfiguriert werden. Hierbei kann auch vorgesehen sein, dass die Konfigurationseinrichtung 48 nur einige der Reglermodule 34, 34, 36, 38, 42 adaptiert. Hierzu kann beispielsweise ein Benutzer Reglermodule auswählen. Bei der Reglervorrichtung 20 werden die Konfigurationsparameter ständig ermittelt. Somit werden die Reglermodule 34, 34', 36, 38, 42 ständig an die aktuelle Trägheitsmoment angepasst und sind gemäß vorgebbarer Kriterien eingestellt, insbesondere zur Maximierung der Regeldynamik. Würde man die Reglervorrichtung 20 auf Basis einer einmaligen Parameterermittlung einstellen, so würde die Reglervorrichtung nur für diesen Zustand gültig sein und die Entwurfskriterien nur für diesen Zustand erfüllt sein. Durch die ständige Ermittlung kann eine Einhaltung der Kriterien auch während des Betriebs mit veränderlichen Lastträgheiten und Kopplungsbedingungen (Steifigkeit, Übersetzung) erreicht werden. Dadurch müssen in die Entwurfskriterien für die Regelparameter der Regelvorrichtung 20 keine wesentlichen Robustheitsreserven neben unbekannter, zukünftiger Lastbedingungen eingearbeitet werden. Das Regelverhalten wäre für diesen Fall mit Robustheitsreserven wesentlich undynamischer.

Bei der Reglervorrichtung 20 ist dagegen mittels der Konfigurationseinrichtung ein dynamischeres Betriebsverhalten des Antriebsstrangs A erreicht. Bei der Anwahl der durch die Konfigurationseinrichtung 48 adaptierten Reglermodule 34, 34', 36, 38, 42 können folgende Optionen eingestellt werden: eine manuelle Einstellung, das heißt der Benutzer konfiguriert doch selbst, eine automatische Einstellung mit fortlaufender Adaption während des Betriebs und eine automatische Adaption zum Suchen der Parameter die dann ohne fortlaufende Adaption beendet wird. Beispielsweise kann letzterer Konfigurationsschritt für eine Minute laufen und dann die Konfigurationsparameter festgelegt werden.

Durch das Anpassen der Konfigurationsparameter des Reglers 36 wird der Regler an die Mechanik des Antriebsstrangs A angepasst. Dies wird auch als Reglertuning bezeichnet. Durch die Adaption der Konfigurationsparameter des Resonanzfilters 38 werden störende Resonanzen des Antriebsstrangs A herausgefiltert. Durch das Einstellen der Konfigurationsparameter der Vorsteuerung 34 und der Symmetrierung 34' erfolgt ein Anpassen der Vorsteuerung an die unterlagerten Regelkreise des Reglers 36. Durch die Anpassung der Konfigurationsparameter der Begrenzungseinrichtung 42 werden die maximale Beschleunigung und die maximale Verzögerung an das von der elektrischen Maschine 22 erzeugbare Motormoment und an das Trägheitsmoment des Antriebsstrangs A angepasst.

In einem zentralen Verarbeitungsblock stellt sich hierbei der Trägheitsschätzer 50 dar, welcher für alle Konfigurationsvorgänge den Eingangswert des geschätzten Trägheitsmomentes J bereitstellen. Durch die Aufteilung der Adaption der Konfigurationsparameter für jedes Reglermodul 34, 34', 36, 38, 42 ist es hierbei möglich, jede Funktion unabhängig von den anderen anzuwählen. Funktionen werden also nicht mehrfach implementiert und die Schnittstellen zwischen den Funktionen können klein und damit aufwandsarm gestaltet werden.

Die Schätzung des Trägheitsmoments muss hierbei nur einmal durch den Trägheitsschätzer 50 implementiert sein und alle anderen Funktionen können sich diesen Wert holen. So ist auch sichergestellt, dass alle Funktionsmodule den gleichen Schätzwert für das Trägheitsmoment bekommen.

Insgesamt ist durch das Beispiel gezeigt, wie Reglereinstellungen der Reglervorrichtung 20 während des Betriebs des Antriebsstrangs A vorgenommen werden können, so dass keine Inbetriebnahmephase durch geschultes Personal nötig ist. Die erfindungsgemäße Reglervorrichtung führt hierzu ein Verfahren zur automatischen Parametrierung der Reglerparameter der elektrischen Antriebsanordnung 10 während des Betriebs des Antriebstrangs A durch.

## Patentansprüche

1. Reglervorrichtung (20) für eine elektrische Maschine (14), wobei die Reglervorrichtung (20) dazu ausgelegt ist, mittels zumindest eines Reglermoduls (34, 34', 36, 38, 42) zumindest einen Stellwert (S) für einen Wechselrichter (16) der Maschine (14) zu erzeugen, und mittels einer Schätzeinrichtung (50) ein Trägheitsmoment zu schätzen, wobei eine Konfigurationseinrichtung (48) bereitgestellt ist, welche dazu ausgelegt ist, während eines Betriebs der elektrischen Maschine (14) ohne ein Zutun eines Benutzers
a) mittels der Schätzeinrichtung (50) das Trägheitsmoment eines die elektrische Maschine (14) und eine daran angebaute Nutzlast (12) umfassenden Antriebsstranges (A) zu schätzen, und
b) in Abhängigkeit von dem geschätzten Trägheitsmoment bei dem zumindest einen Reglermodul (34, 34', 36, 38, 42) jeweils zumindest einen ein Stellverhalten des jeweiligen Reglermoduls (34, 34', 36, 38, 42) bestimmenden Konfigurationsparameter einzustellen,
**dadurch gekennzeichnet , dass** als ein Reglermodul ein einem Regler vorgelagertes oder nachgeordnetes Resonanzfilter (38) mit einer Bandsperre (40) bereitgestellt ist und die Konfigurationseinrichtung (48) dazu ausgelegt ist, eine Eigenschwingfrequenz (F0) des Antriebstranges (A) zu ermitteln und die Bandsperre (40) auf die Eigenschwingfrequenz (F0) zu verschieben, wobei die Eigenfrequenz auf der Grundlage des geschätzten Trägheitsmoments ermittelt wird.

2. Reglervorrichtung (20) nach Anspruch 1, wobei die Konfigurationseinrichtung (48) dazu ausgelegt ist, die Schätzeinrichtung (50) nur zu betreiben, falls eine Beschleunigung des Antriebsstranges (A) größer als eine vorbestimmte Mindestbeschleunigung ist.

3. Reglervorrichtung (20) nach einem der vorhergehenden Ansprüche, wobei die Konfigurationseinrichtung (48) dazu ausgelegt ist, eine von der Nutzlast auf die elektrische Maschine (14) wirkende Lastkraft zu ermitteln, während eine Geschwindigkeitsänderung der elektrischen Maschine (14) betragsmäßig kleiner als ein vorbestimmter Mindestwert ist.

4. Reglervorrichtung (20) nach einem der vorhergehenden Ansprüche, wobei als ein Reglermodul eine Lageregelung (36) und/oder Geschwindigkeitsregelung (36) bereitgestellt ist und die Konfigurationseinrichtung dazu ausgelegt ist, als den zumindest einen Konfigurationsparameter dieses Reglermoduls (36) eine Reglerverstärkung und/oder Filtereinstellung und/oder ein Referenzmodell einzustellen.

5. Reglervorrichtung (20) nach einem der vorhergehenden Ansprüche, wobei als ein Reglermodul eine Vorsteuerung (34) und/oder eine von einer Vorsteuerung (34) abhängige Symmetrierung (34') bereitgestellt ist und die Konfigurationseinrichtung (38) dazu ausgelegt ist, als den zumindest einen Konfigurationsparameter dieses Reglermoduls (34, 34) einen Soll-Stellwert und/oder eine Zeitkonstante einzustellen.

6. Reglervorrichtung (20) nach einem der vorhergehenden Ansprüche, wobei als ein Reglermodul eine Beschleunigungsbegrenzung (42) der elektrischen Maschine (14) bereitgestellt ist und die Konfigurationseinrichtung (48) dazu ausgelegt ist, als den zumindest einen Konfigurationsparameter dieses Reglermoduls (42) einen Wert für eine Maximalbeschleunigung (44) und/oder einen Wert für einen maximale Verzögerung (46) einzustellen.

7. Reglervorrichtung (20) nach einem der vorhergehenden Ansprüche, wobei mehrere Reglermodule (34, 34', 36, 38, 42) bereitgestellt sind und die Konfigurationseinrichtung (48) dazu ausgelegt ist, jedes Reglermodul (34, 34', 36, 38, 42) unabhängig von jedem anderen Reglermodul (34, 34', 36, 38, 42) zu konfigurieren.

8. Reglervorrichtung (20) nach einem der vorhergehenden Ansprüche, wobei die Konfigurationseinrichtung (48) dazu ausgelegt ist, während des Betriebs des Antriebsstranges (A) das Einstellen der Konfigurationsparameter
a) dauerhaft durch iteratives Adaptieren oder
b) mehrmals, zu vorbestimmten Zeitpunkten und hierbei jeweils für eine vorbestimmte Zeitdauer oder bis zur Erfüllung eines vorbestimmten Konvergenzkriteriums durchzuführen.

9. Antriebsanordnung (10) umfassend eine elektrische Maschine (14) und eine mit einem Wechselrichter (16) der elektrischen Maschine (14) gekoppelte Reglervorrichtung (20), die gemäß einem der vorhergehenden Ansprüche ausgestaltet ist.

10. Verfahren zum Konfigurieren einer Reglervorrichtung (20) während eines Betriebs eines von der Reglervorrichtung (20) gesteuerten Antriebsstrangs (A), indem während eines Betriebs des Antriebsstrangs (A) ohne ein Zutun eines Benutzers ein Schätzeinrichtung (50) für ein Trägheitsmoment des Antriebsstranges (A) betrieben wird und in Abhängigkeit von dem geschätzten Trägheitsmoment bei zumindest einem Reglermodul (34, 34', 36, 38, 42) der Reglervorrichtung jeweils zumindest ein Stellverhalten des jeweiligen Reglermoduls (34, 34', 36, 38, 42) bestimmender Konfigurationsparameter eingestellt wird **dadurch gekennzeichnet , dass** als ein Reglermodul ein einem Regler vorgelagertes oder nachgeordnetes Resonanzfilter (38) mit einer Bandsperre (40) bereitgestellt ist und eine Konfigurationseinrichtung (48) eine Eigenschwingfrequenz (F0) des Antriebstranges (A) ermittelt und die Bandsperre (40) auf die Eigenschwingfrequenz (F0) verschiebt, wobei die Eigenfrequenz auf der Grundlage des geschätzten Trägheitsmoments ermittelt wird.

## Claims

1. Control apparatus (20) for an electric machine (14), wherein the control apparatus (20) is designed to generate at least one control value (S) for an inverter (16) of the machine (14) by means of at least one control module (34, 34', 36, 38, 42) and to estimate a moment of inertia by means of an estimating device (50), wherein a configuration device (48) is provided which, during operation of the electric machine (14) without assistance from a user, is designed,
(a) to estimate the moment of inertia of a drive train (A) comprising the electric machine (14) and a payload (12) installed thereon by means of the estimating device (50), and
(b) to set at least one configuration parameter that determines an adjustment characteristic of the respective control module (34, 34', 36, 38, 42) as a function of the estimated moment of inertia with the at least one control module (34, 34', 36, 38, 42) in each case,
**characterised in that** a resonance filter (38) that is arranged upstream or downstream of a controller and has a band elimination filter (40) is provided as a control module and the configuration device (48) is designed to determine a natural resonance frequency (F0) of the drive train (A) and to displace the band elimination filter (40) to the natural resonance frequency (F0), wherein the natural frequency is determined on the basis of the estimated moment of inertia.

2. Control apparatus (20) according to claim 1, wherein the configuration device (48) is designed to only operate the estimating device (50) if an acceleration of the drive train (A) is greater than a predetermined minimum acceleration.

3. Control apparatus (20) according to one of the preceding claims, wherein the configuration device (48) is designed to determine a load force acting on the electric machine (14) by the payload, whereas a change in speed of the electric machine (14) is smaller than a predetermined minimum value according to amount.

4. Control apparatus (20) according to one of the preceding claims, wherein a position control (36) and/or speed control (36) is provided as a control module and the configuration device is designed to set a control amplification and/or filter setting and/or a reference model as the at least one configuration parameter of this control module (36).

5. Control apparatus (20) according to one of the preceding claims, wherein a servo control (34) and/or a balancing (34') dependent on a servo control (34) is provided as a control module and the configuration device (38) is designed to set a target control value and/or a time constant as the at least one configuration parameter of this control module (34, 34).

6. Control apparatus (20) according to one of the preceding claims, wherein an acceleration limitation (42) of the electric machine (14) is provided as a control module and the configuration device (48) is designed to set a value for a maximum acceleration (44) and/or a value for a maximum delay (46) as the at least one configuration parameter of this control module (42).

7. Control apparatus (20) according to one of the preceding claims, wherein a number of control modules (34, 34', 36, 38, 42) are provided and the configuration device (48) is designed to configure each control module (34, 34', 36, 38, 42) independently of each other control module (34, 34', 36, 38, 42).

8. Control apparatus (20) according to one of the preceding claims, wherein during operation of the drive train (A) the configuration device (48) is designed to carry out the setting of the configuration parameters
a) durably by iterative adaptation or
b) repeatedly, at predetermined points in time and in the process in each case for a predetermined period of time or until a predetermined convergence criterion is fulfilled.

9. Drive arrangement (10) comprising an electric machine (14) and a control device (20) coupled to an inverter (16) of the electric machine (14), which is designed in accordance with one of the preceding claims.

10. Method for configuring a control device (20) during operation of a drive train (A) controlled by the control device (20), by an estimating device (50) for a moment of inertia of the drive train (A) being operated during operation of the drive train (A) without assistance from a user, and at least one adjustment characteristic of the respective control module (34, 34', 36, 38, 42) of specific configuration parameters being set as a function of the estimated moment of inertia with at least one control module (34, 34', 36, 38, 42) of the control device in each case, **characterised in that** a resonance filter (38) that is arranged upstream or downstream of a controller and has a band elimination filter (40) is provided as a control module and a configuration device (48) determines a natural resonance frequency (F0) of the drive train (A) and the band elimination filter (40) moves to the natural resonance frequency (F0) wherein the natural frequency is determined on the basis of the estimated moment of inertia.

## Revendications

1. Système (20) à régulateur pour une machine (14) électrique, le système (20) à régulateur étant conçu pour produire, à l'aide d'au moins un module (34, 34', 36, 38, 42) de régulateur, au moins une valeur (S) de réglage d'un onduleur (16) de la machine (14) et pour estimer un moment d'inertie, au moyen d'un dispositif (50) d'estimation, dans lequel il est mis à disposition un dispositif (48) de configuration, conçu pour, pendant un fonctionnement de la machine (14) électrique et sans intervention d'un utilisateur,
a) estimer, au moyen du dispositif (50) d'estimation, le moment d'inertie d'une chaîne (A) d'entraînement, comprenant la machine (14) électrique et une charge (12) utile qui y est raccordée et
b) régler, en fonction du moment d'inertie estimé, dans le au moins un module (34, 34', 36, 38, 42) de régulateur, respectivement au moins un paramètre de régulation déterminant un comportement de réglage du module (34, 34', 36, 38, 42) de régulateur,
**caractérisé en ce qu'**il est mis à disposition, comme module de régulateur, un filtre (38) de résonance, monté avant ou après un régulateur, avec un filtre (40) à élimination de bande et le dispositif (48) de configuration est conçu pour déterminer une fréquence (F0) d'oscillation propre de la chaîne (A) d'entraînement et pour décaler le filtre (40) d'élimination de bande à la fréquence (F0) d'oscillation propre, la fréquence propre étant déterminée sur la base du moment d'inertie estimé.

2. Système (20) à régulateur suivant la revendication 1, dans lequel le dispositif (48) de configuration est conçu pour faire fonctionner le dispositif (50) d'estimation, seulement si une accélération de la chaîne (A) d'entraînement est plus grande qu'une accélération minimum définie à l'avance.

3. Système (20) à régulateur suivant l'une des revendications précédentes, dans lequel le dispositif (48) de configuration est conçu pour déterminer une force de charge agissant par la charge utile sur la machine (14) électrique, tandis qu'une variation de vitesse de la machine (14) électrique est plus petite en valeur absolue qu'une valeur minimum définie à l'avance.

4. Système (20) à régulateur suivant l'une des revendications précédentes, dans lequel il est mis à disposition, comme module de régulateur, une régulation (36) de palier et/ou une régulation (36) de vitesse et le dispositif de configuration est conçu pour régler, comme au moins un paramètre de configuration de ce module (36) de régulateur, une amplification de régulateur et/ou un réglage de filtrage et/ou un modèle de référence.

5. Système (20) à régulateur suivant l'une des revendications précédentes, dans lequel il est mis à disposition, comme module de régulateur, une commande (34) pilote et/ou une symétrisation (34') dépendante d'une commande (34) pilote et le dispositif (38) de configuration est conçu pour régler, comme le au moins un paramètre de configuration de ce module (34, 34) de régulateur, une valeur de réglage de consigne et/ou une constante de temps.

6. Système (20) à régulateur suivant l'une des revendications précédentes, dans lequel il est mis à disposition, comme module de régulateur, une limitation (42) d'accélération de la machine (14) électrique et le dispositif (48) de configuration est conçu pour régler, comme le au moins un paramètre de configuration de ce module (42) de régulateur, une valeur d'une accélération (44) maximum et/ou une valeur d'une décélération (46) maximum.

7. Système (20) à régulateur suivant l'une des revendications précédentes, dans lequel il est mis à disposition plusieurs modules (34, 34', 36, 38, 42) de régulateur et le dispositif (48) de configuration est conçu pour configurer chaque module (34, 34', 36, 38, 42) de régulateur indépendamment de chaque autre module (34, 34', 36, 38, 42) de régulateur.

8. Système (20) à régulateur suivant l'une des revendications précédentes, dans lequel le dispositif (48) de configuration est conçu pour, pendant le fonctionnement de la chaîne (A) d'entraînement, effectuer le réglage du paramètre de configuration
a) en permanence par adaptation itérative ou
b) plusieurs fois à des instants définis à l'avance et ainsi pendant une durée définie à l'avance ou jusqu'à satisfaction d'un critère de convergence défini à l'avance.

9. Dispositif (10) d'entraînement comprenant une machine (14) électrique et un système (20) de régulation couplé à un onduleur (16) de la machine (14) électrique et conformé suivant l'une des revendications précédentes.

10. Procédé de configuration d'un système (20) à régulateur pendant un fonctionnement d'une chaîne (A) d'entraînement commandée par le système (20) à régulateur, dans lequel, pendant un fonctionnement de la chaîne (A) d'entraînement, on fait fonctionner, sans intervention d'un utilisateur, un dispositif (50) d'estimation d'un moment d'inertie de la chaîne (A) d'entraînement et, en fonction du moment d'inertie estimé, on règle, dans le au moins un module (34, 34', 36, 38, 42) de régulateur du système à régulateur, au moins un comportement de réglage du module (34, 34', 36, 38, 42) de régulateur respectif, **caractérisé en ce qu'**il est mis à disposition, comme module de régulateur, un filtre (38) de résonance, monté avant ou après un régulateur et ayant un filtre (40) à élimination de bande et un dispositif (48) de configuration détermine une fréquence (F0) d'oscillation propre de la chaîne (A) d'entraînement et décale le filtre (40) à élimination de bande sur la fréquence (F0) d'oscillation propre, la fréquence propre étant déterminée sur la base du moment d'inertie estimé.
